# EUROPEAN PATENT SPECIFICATION

(11) **EP 3 338 354 B1**
(45) Date of publication and mention of the grant of the patent: **16.06.2021**
(21) Application number: 16753328.0
(22) Date of filing: 10.08.2016
(51) Int. Cl.: H02M 7/483

(54) **VOLTAGE SOURCE CONVERTER**
SPANNUNGSQUELLENUMRICHTER
CONVERTISSEUR DE SOURCE DE TENSION

(30) Priority: 19.08.2015 GB 201514745
(43) Date of publication of application: 27.06.2018
(73) Proprietor: General Electric Technology GmbH, 5400 Baden (CH)
(72) Inventor: MORENO MUÑOZ, Francisco, Jose, 31780 Bera (Navarra) (ES); BRIFF, Pablo, Stafford ST16 3AB (GB)
(74) Representative: Brevalex
(86) International application number: PCT/EP2016/069062
(87) International publication number: WO 2017/029171

(56) References cited:
- EP-A1- 2 814 166
- WO-A1-2012/055435
- WO-A1-2015/022030

## Description

This invention relates to a voltage source converter and to a method of operating a voltage source converter.

A voltage source converter facilitates the transfer of power between different electrical networks.

A first aspect of the invention is defined by a voltage source converter according to claim 1.

Operation of the voltage source converter to facilitate the transfer of power between different electrical networks could result in energy accumulation in or energy loss from at least one energy storage device, thus resulting in deviation of the energy level of at least one energy storage device from a reference value.

Such a deviation is undesirable because, if too little energy is stored within a given energy storage device then the voltage the given energy storage device is able to generate is reduced, whereas if too much energy is stored in a given energy storage device then over-voltage problems may arise. The former would require the addition of a power source to restore the energy level of the affected energy storage device to the reference value, while the latter would require an increase in voltage rating of one or more energy storage devices to prevent the over-voltage problems, thus adding to the overall size, weight and cost of the voltage source converter. In addition if too little energy is stored within a given energy storage device then the voltage source converter might trip due to under-voltage protection.

Accordingly the operation of the voltage source converter includes the association of each energy storage device with a respective target energy level, where such operation is designed to reduce the deviation of the energy level of each energy storage device from the corresponding target energy level and/or to reduce the amount of time during which the energy level of each energy storage device deviates from the corresponding target energy level.

Regulation of the energy level of each energy storage device can be carried out through an energy regulation process that involves controlling the switching of the plurality of switching elements to force a common current to flow through two or more energy storage devices, and thereby connect the two or more energy storage devices with one another, to enable the exchange of energy between the two or more energy storage devices. The flow of the common current through the two or more energy storage devices may include, but is not limited to, embodiments in which: the current flowing through the two or more energy storage devices is equal to the common current; and the current flowing through the two or more energy storage devices is equal to a current comprising multiple current components, where the common current is one of the current components.

EP 2 814 166 A1 discloses an alternate arm converter comprising at least one converter limb including first and second limb portions. Each limb portion comprises a director switch connected in series with a chain-link converter. The alternate arm converter further comprises a controller configured to selectively control the director switches so as to transfer energy between the chain-link converter of one limb portion and the chain-link converter of the other limb portion.

The provision of the controller in the voltage source converter of the invention permits the preparation of the stored energy buffer or provided energy storage capacity in advance of the energy regulation process and thereby improves the efficiency and reliability of the energy regulation process. This is because, without the advance preparation of the stored energy buffer or provided energy storage capacity, there is a risk that a lack of sufficient stored energy or energy storage capacity could arise during the energy regulation process, thus resulting in sub-optimal regulation of the energy levels of the energy storage devices and thereby adversely affecting the performance of the voltage source converter.

In addition the ability to prepare the stored energy buffer or provided energy storage capacity in advance of the energy regulation process can be particularly advantageous under circumstances in which one or more energy storage devices experiences a deviation in energy level beyond what is normally expected, since the additional level of deviation can be readily taken into account when determining the amount of energy required to be absorbed or released by the or each first energy storage device to move towards or reach the target energy level.

It will be appreciated that the invention is applicable to a voltage source converter that is operated as a linear time-invariant system or a non-linear time-variant system.

In embodiments of the invention the controller may be programmed to operate in the energy regulation mode to control the switching of the plurality of switching elements to force a current to flow through the or each second energy storage device so as to store a buffer of energy in the or each second energy storage device or release energy to provide energy storage capacity in the or each second energy storage device when the or each first energy storage device is disconnected from the or each second energy storage device. This allows the invention to be applied to voltage source converters in which energy storage devices to be subjected to energy regulation are required to be temporarily disconnected from one another.

In further embodiments of the invention the controller may be programmed to operate in the energy regulation mode to control the switching of the plurality of switching elements to selectively permit and inhibit flow of current through each energy storage device in order to control the transfer of power between the terminals concurrently with the operation of the controller in the energy regulation mode. Programming the controller in this manner permits the regulation of the energy levels of the energy storage devices of the voltage source converter to be carried out simultaneously with the transfer of power between the terminals, thus resulting in an efficient operation of the voltage source converter.

The target energy level of the or each first energy storage device may vary.

The target energy level of the or each first energy storage device may be the average of the energy levels of some or all of the plurality of energy storage devices. The target energy level of the or each first energy storage device may be a portion of its maximum energy storage capacity. When multiple energy storage devices are designated as respective first energy storage devices, the target energy level of at least one of the first energy storage devices may be the same as or different from the target energy level of at least one other of the first energy storage devices.

The amount of energy required to be absorbed or released by the or each first energy storage device to move towards or reach a target energy level may be the amount of energy required to be absorbed or released by the or each first energy storage device to balance the energy levels of the first and second energy storage devices.

In still further embodiments of the invention the controller may be programmed to operate in the energy regulation mode to determine the amount of energy required to be absorbed or released by the or each first energy storage device to move towards or reach a target energy level by predicting the amount of energy required to be absorbed or released by the or each first energy storage device to move towards or reach a target energy level.

In such embodiments predicting the amount of energy required to be absorbed or released by the or each first energy storage device to move towards or reach a target energy level may include predicting the amount of energy required to be absorbed or released by the or each first energy storage device based on the operation of the voltage source converter.

In further such embodiments predicting the amount of energy required to be absorbed or released by the or each first energy storage device to move towards or reach a target energy level may include predicting the amount of energy required to be absorbed or released by the or each first energy storage device based on historic data on the operation of the voltage source converter and/or data on the designed operation of the voltage source converter.

The configuration of the controller to operate in the energy regulation mode based on a prediction of the amount of energy required to be absorbed or released by the or each first energy storage device to move towards or reach a target energy level allows the energy regulation process to be more closely aligned with the desired operation of the voltage source converter to optimise converter performance.

The arrangement of the plurality of switching elements and the plurality of energy storage devices in the voltage source converter may vary.

In embodiments of the invention employing an exemplary arrangement of the plurality of switching elements and the plurality of energy storage devices, the voltage source converter may include a plurality of modules connected between the plurality of terminals, each module including at least one of the plurality of switching elements and at least one of the plurality of energy storage devices, the or each switching element and the or each energy storage device in each module arranged to be combinable to selectively provide a voltage source.

The plurality of modules, particularly a plurality of series-connected modules, may define a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation.

In embodiments of the invention employing another exemplary arrangement of the plurality of switching elements and the plurality of energy storage devices, the voltage source converter may include a plurality of valves, each valve including at least one of the plurality of switching elements and at least one of the plurality of energy storage devices, the or each switching element in each valve being switchable to selectively permit and inhibit flow of current through the or each corresponding energy storage device in order to control a voltage across the corresponding valve, wherein the controller is programmed to operate in the energy regulation mode to designate the energy storage device or at least one of the energy storage devices in one or more of the plurality of valves as a or a respective first energy storage device, and designate the energy storage device or at least one of the energy storage devices in one or more other of the plurality of valves as a or a respective second energy storage device.

In such embodiments each valve may include at least one of the plurality of modules.

At least one switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching element may vary depending on the required voltage and current ratings of that switching element.

The or each switching element may further include a passive current check element that is connected in anti-parallel with the or each switching device.

The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be, but is not limited to, a capacitor, fuel cell or battery.

Optionally each limb portion of the converter limb may include a respective one of the plurality of valves, and the controller may be programmed to operate in the energy regulation mode to:
(i) designate the energy storage device or at least one of the energy storage devices in the valve of one of the first and second limb portions as a or a respective first energy storage device, and designate the energy storage device or at least one of the energy storage devices in the valve of the other of the first and second limb portions as a or a respective second energy storage device; and
(ii) control the switching of the switching elements in the valves of the first and second limb portions to force a common current to flow through the first and second energy storage devices so as to: transfer the stored buffer of energy from the or each second energy storage device to the or each first energy storage device; or transfer energy from the or each first energy storage device to the provided energy storage capacity of the or each second energy storage device.

The control of the switching of the switching elements in the valves of the first and second limb portions to force a common current to flow through the first and second energy storage devices may include, but is not limited to, the control of the switching of the switching elements in the valves of the first and second limb portions to form a current circulation path in which the common current circulates through the limb portions of the converter limb and the DC network.

Further optionally the voltage source converter may include a plurality of converter limbs, the AC terminal of each converter limb for connection to a respective phase of a multi-phase AC network, at least one of the limb portions of each converter limb including a respective one of the plurality of valves, and the controller may be programmed to operate in the energy regulation mode to:
(i) designate the energy storage device or at least one of the energy storage devices in at least one selected valve of one of the plurality of converter limbs as a or a respective first energy storage device, and designate the energy storage device or at least one of the energy storage devices in at least one selected valve of another of the plurality of converter limbs as a or a respective second energy storage device; and
(ii) control the switching of the switching elements in the selected valves to force a common current to flow through the first and second energy storage devices so as to: transfer the stored buffer of energy from the or each second energy storage device to the or each first energy storage device; or transfer energy from the or each first energy storage device to the provided energy storage capacity of the or each second energy storage device.

The control of the switching elements in the selected valves to force a common current to flow through the first and second energy storage devices may include, but is not limited to, the control of the switching elements in the selected valves to form a current circulation path in which the common current circulates through the selected valves, the AC phases connected to the AC terminals of the converter limbs with the selected valves; and the DC network.

A second aspect of the invention is defined by a method of operating a voltage source converter according to claim 18.

The features and advantages of the voltage source converter of the first aspect of the invention and its embodiments apply mutatis mutandis to the method of the second aspect of the invention.

It will also be appreciated that the use of the terms "first" and "second" in the patent specification is merely intended to help distinguish between similar features (e.g. the first and second limb portions), and is not intended to indicate the relative importance of one feature over another feature.

A preferred embodiment of the invention will now be described, by way of a non-limiting example, with reference to the accompanying drawings in which:
Figure 1 shows schematically a voltage source converter according to an embodiment of the invention;
Figure 2a shows schematically the structure of a full-bridge module;
Figure 2b shows schematically the structure of a half-bridge module;
Figure 3 shows schematically the operation of the voltage source converter of Figure 1 to regulate the energy levels of its valves; and
Figure 4 illustrates the operation of the controller of the voltage source converter of Figure 1 in an energy regulation mode.

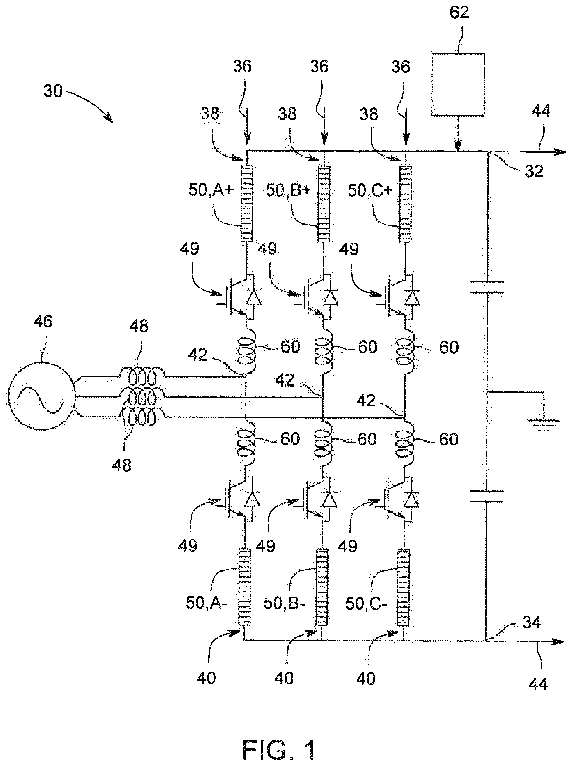

A voltage source converter according to an embodiment of the invention is shown in Figure 1 and is designated generally by the reference numeral 30.

The voltage source converter 30 includes first and second DC terminals 32,34 and a plurality of converter limbs 36. Each converter limb 36 extends between the first and second DC terminals 32,34 and includes first and second limb portions 38,40 separated by a respective AC terminal 42. In each converter limb 36, the first limb portion extends between the first DC terminal 32 and the AC terminal 42, while the second limb portion extends between the second DC terminal 34 and the AC terminal 42.

In use, the first and second DC terminals 32,34 of the voltage source converter 30 are connected to a DC network 44, and the AC terminal 42 of each converter limb 36 is connected to a respective AC phase of a three-phase AC network 46 via a respective series-connected phase inductor or transformer 48.

Each of the first and second limb portions 38,40 includes a director switch 49 connected in series with a valve 50.

Each director switch 49 includes a plurality of series-connected switching elements. It is envisaged that, in other embodiments of the invention, each plurality of series-connected switching elements may be replaced by a single switching element.

The configuration of the limb portions 38,40 in this manner means that, in use, the director switch 49 of each limb portion 38,40 is switchable to switch the respective limb portion 38,40 and therefore the respective valve 50 into and out of circuit between the respective DC and AC terminals 32,34,42.

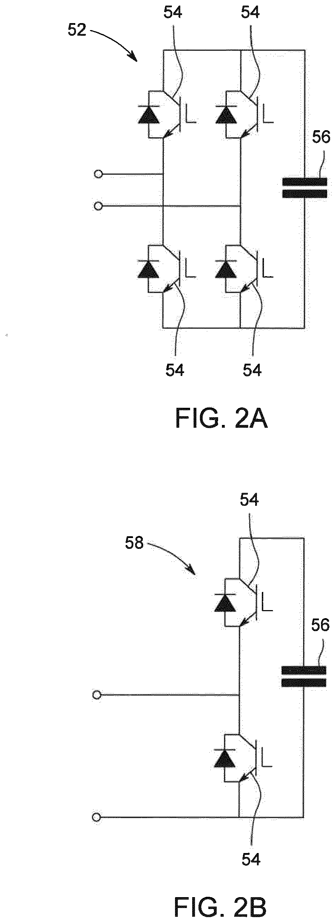

Each valve 50 includes a chain-link converter that is defined by a plurality of series-connected modules 52. Figure 2a shows schematically the structure of each module 52.

Each module 52 includes two pairs of switching elements 54 and a capacitor 56 in a full-bridge arrangement. The two pairs of switching elements 54 are connected in parallel with the capacitor 56 in a full-bridge arrangement to define a 4-quadrant bipolar module that can provide negative, zero or positive voltage and can conduct current in both directions.

Each switching element 54 is in the form of an insulated gate bipolar transistor (IGBT) which is connected in parallel with an anti-parallel diode.

It is envisaged that, in other embodiments of the invention, each IGBT may be replaced by a gate turn-off thyristor, a field effect transistor, an injection-enhanced gate transistor, an integrated gate commutated thyristor or any other self-commutated semiconductor device. It is also envisaged that, in other embodiments of the invention, each diode may be replaced by a plurality of series-connected diodes.

The capacitor 56 of each module 52 is selectively bypassed or inserted into the corresponding chain-link converter by changing the states of the switching elements 54. This selectively directs current through the capacitor 56 or causes current 58 to bypass the capacitor 56, so that the module 52 provides a negative, zero or positive voltage.

The capacitor 56 of the module 52 is bypassed when the switching elements 54 in the module 52 are configured to form a short circuit in the module 52, whereby the short circuit bypasses the capacitor 56. This causes current in the corresponding chain-link converter to pass through the short circuit and bypass the capacitor 56, and so the module 52 provides a zero voltage, i.e. the module 52 is configured in a bypassed mode.

The capacitor 56 of the module 52 is inserted into the corresponding chain-link converter when the switching elements 54 in the module 52 are configured to allow the current in the corresponding chain-link converter to flow into and out of the capacitor 56. The capacitor 56 then charges or discharges its stored energy so as to provide a non-zero voltage, i.e. the module 52 is configured in a non-bypassed mode. The full-bridge arrangement of the module 52 permits configuration of the switching elements 54 in the module 52 to cause current to flow into and out of the capacitor 56 in either direction, and so the module 52 can be configured to provide a negative or positive voltage in the non-bypassed mode.

In this manner the switching elements 54 in each module 52 are switchable to control flow of current through the corresponding capacitor 56.

It is possible to build up a combined voltage across each chain-link converter, which is higher than the voltage available from each of its individual modules 52, via the insertion of the capacitors 56 of multiple modules 52, each providing its own voltage, into each chain-link converter. In this manner switching of the switching elements 54 in each module 52 causes each chain-link converter to provide a stepped variable voltage source, which permits the generation of a voltage waveform across each chain-link converter using a step-wise approximation. Hence, the switching elements 54 in each valve 50 are switchable to selectively permit and inhibit flow of current through the corresponding capacitor in order to control a voltage across the corresponding valve 50.

It is envisaged that, in other embodiments of the invention, each module 52 may be replaced by another type of module, which includes at least one switching element and at least one energy storage device, the or switching element and the or each energy storage device in each module being arranged to be combinable to selectively provide a voltage source. For example, each module 52 may be replaced by a module 58 that includes a pair of switching elements 54 connected in parallel with a capacitor 56 in a half-bridge arrangement to define a 2-quadrant unipolar module that can provide zero or positive voltage and can conduct current in both directions, as shown in Figure 2b.

It is also envisaged that, in other embodiments of the invention, the capacitor 56 in each module 52,58 may be replaced by another type of energy storage device which is capable of storing and releasing energy to provide a voltage, e.g. a battery or a fuel cell.

Each limb portion 38,40 further includes an inductor 60 connected in series with the corresponding director switch 49 and valve 50.

The voltage source converter 30 further includes a controller 62 programmed to control the switching of the switching elements 54 in the director switches 49 and the valves 50 in the limb portions 38,40.

In order to transfer power between the DC and AC networks 44,46, the controller 62 controls the director switches 49 to switch the respective valves 50 into and out of circuit between the respective DC and AC terminals 32,34,42 to interconnect the DC and AC networks 44,46. When a given valve 50 is switched into circuit between the respective DC and AC terminals 32,34,42, the controller 62 switches the switching elements 54 of the modules 52 of the given valve 50 to provide a stepped variable voltage source and thereby generate a voltage waveform so as to control the configuration of an AC voltage waveform at the corresponding AC terminal 42 to facilitate the transfer of power between the DC and AC networks 44,46.

To generate a positive AC voltage component of an AC voltage waveform at the AC terminal 42 of a given converter limb 36, the director switch 49 of the first limb portion 38 is closed (to switch the valve 50 connected in series therewith into circuit between the first DC terminal 32 and the corresponding AC terminal 42) and the director switch 49 of the second limb portion 40 is opened (to switch the valve 50 connected in series therewith out of circuit between the second DC terminal 34 and the corresponding AC terminal 42).

To generate a negative AC voltage component of an AC voltage waveform at the AC terminal 42 of a given converter limb 36, the director switch 49 of the second limb portion 40 is closed (to switch the valve 50 connected in series therewith into circuit between the second DC terminal 34 and the corresponding AC terminal 42) and the director switch 49 of the first limb portion 38 is opened (to switch the valve 49 connected in series therewith out of circuit between the first DC terminal 32 and the corresponding AC terminal 42).

The AC voltage waveform at each AC terminal 42 is phase-shifted from the AC voltage waveform at each other AC terminal 42 by 120 electrical degrees, as is typical practice for a voltage source converter 30 connected to a three-phase AC network 46.

Operation of the voltage source converter 30 to facilitate the transfer of power between the DC and AC networks 44,46 could result in energy accumulation in or energy loss from at least one of the capacitors 56.

During the transfer of power between the DC and AC networks 44,46, an energy regulation process can be carried out to regulate the energy level of each capacitor 56. The energy regulation process is carried out by controlling the switching of the switching elements 54 in each valve 50 to force a common current to flow through two or more capacitors 56, and thereby connect the two or more capacitors 56 with one another, to enable the exchange of energy between the two or more capacitors 56.

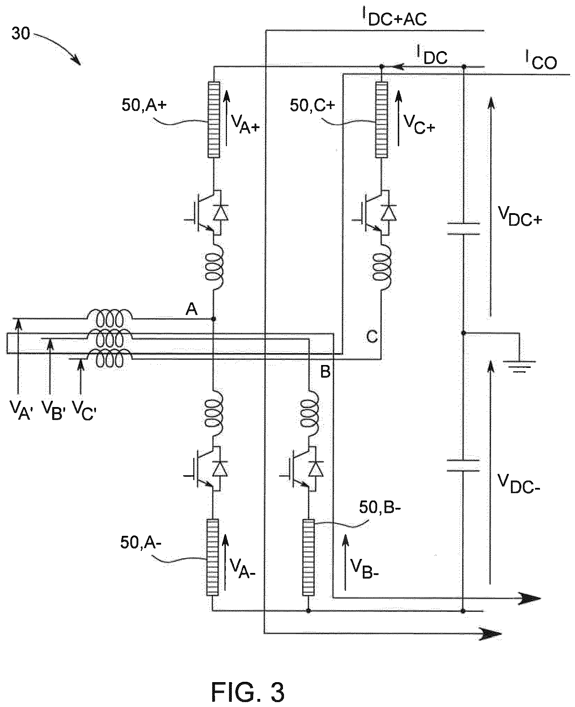

In one example of the energy regulation process in which a common current is forced to flow through two or more capacitors 56, during a changeover from a positive AC voltage component to a negative AC voltage component, the controller 62 switches the director switches 49 to switch both limb portions 38,40 of the same converter limb 36 concurrently into circuit during an overlap period of the operating cycle of the voltage source converter 30, i.e. valves A+ and A- are in "overlap mode", so as to form a current circulation path which includes each limb portion 38,40 and the DC network 44, as shown schematically in Figure 3. Similarly, during a changeover from a negative AC voltage component to a positive AC voltage component, the controller 62 switches the director switches 49 to switch both limb portions 38,40 of the same converter limb 36 concurrently into circuit during another overlap period of the operating cycle of the voltage source converter 30, so as to form the same current path. This permits the temporary circulation of a common current, in the form of an overlap current I_{DC+AC}, through the valve A+ of the first limb portion 38, the valve A- of the second limb portion 40 and the DC network 44 in order to regulate the energy levels of the capacitors 56 of the valves A+,A- of the limb portions 38,40 switched concurrently into circuit.

The energy regulation process based on the "overlap mode" applies mutatis mutandis to the valves B+,B-,C+,C- of each converter limb 36, instead of just the valves A+,A-.

In another example of the energy regulation process in which a common current is forced to flow through two or more capacitors 56, referring to Figure 3, when the valves A+, A- of the limb portions 38,40 of a first of the converter limbs 36 are in the "overlap mode", the valve B- of the second limb portion 40 of a second of the converter limbs 36 and the valve C+ of the first limb portion 38 of a third of the converter limbs 36 are switched into circuit between their respective DC and AC terminals 32,34,42 as part of the operation of the voltage source converter 30 to transfer power between the DC network 44 and the three-phase AC network 46. Meanwhile the valve B+ of the first limb portion 38 of the second converter limb 36 and the valve C- of the second limb portion 40 of the third converter limb 36 are switched out of circuit.

In this manner the controller 62 controls the switching of: a selected valve B- of one of the plurality of converter limbs 36; and another selected valve C+ of another of the plurality of converter limbs 36 so as to form a current circulation path passing through the selected valves B-,C+, where the current circulation path includes: the selected valves B-,C+, the AC phases B,C connected to the converter limbs 36 with the selected valves B-,C+; and the DC network 44. For the sake of simplicity, the selected valves B-,C+ are referred to as being in a "cross-overlap mode" during the formation of the current circulation path. During the "cross-overlap mode", the controller 62 controls the switching elements 54 in the selected valves B-,C+ to circulate a common current, in the form of a circulating alternating current I_{CO}, through the current circulation path in order to regulate the energy levels of the capacitors 56 of the selected valves B-,C+.

The energy regulation process based on the "cross-overlap mode" applies mutatis mutandis to a selected valve 50 of any one of the plurality of converter limbs 36; and another selected valve 50 of any other of the plurality of converter limbs 36, instead of just the valves B-,C+.

It will be appreciated that the "overlap mode" and the "cross-overlap mode" may be carried out separately instead of concurrently as shown in Figure 3.

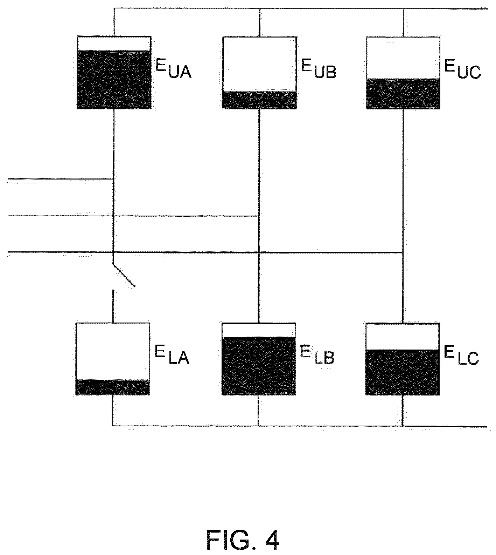

The energy regulation process can be further enhanced through the operation of the controller 62 in an energy regulation mode. Figure 4 illustrates the operation of the controller 62 of the voltage source converter 30 of Figure 1 in the energy regulation mode.

For the purposes of illustrating the energy regulation mode of the controller 62, the capacitors 56 in each valve 50 is represented by a respective single equivalent capacitor E_{UA},E_{LA}, E_{UB},E_{LB},E_{UC},E_{LC}.

In the embodiment shown the target energy level for each capacitor E_{UA},E_{LA}, E_{UB},E_{LB},E_{UC},E_{LC} is half of its maximum energy storage capacity and is the average of the energy levels of the capacitors E_{UA},E_{LA},E_{UB},E_{LB},E_{UC},E_{LC} across the voltage source converter 30. Whilst the average of the energy levels of the capacitors E_{UA},E_{LA},E_{UB},E_{LB},E_{UC},E_{LC} across the voltage source converter 30 is at the target energy level, the individual energy level of each capacitor E_{UA},E_{LA}, E_{UB},E_{LB},E_{UC},E_{LC} is shown in Figure 4 as being either higher or lower than the target energy level.

The following first exemplary operation of the controller 62 in the energy regulation mode is described with reference to the capacitors E_{UA},E_{LA}, but it will be understood that such operation applies mutatis mutandis to the capacitors E_{UB},E_{LB} and the capacitors E_{UC},E_{LC}.

When the capacitor E_{LA} is below its target energy level, the capacitor E_{UA} could transfer part of its stored energy to the capacitor E_{LA} to enable the capacitor E_{LA} to move towards or reach its target energy level. However, it is possible that the capacitor E_{LA} is connected out of circuit at a time instant tₖ, thus disconnecting the capacitor E_{LA} from the capacitor E_{UA} and thereby rendering it not possible to transfer energy from the capacitor E_{UA} to the capacitor E_{LA} at that instant of time.

Initially the controller 62 designates the capacitor E_{LA} as a first capacitor, and designates the capacitor E_{UA} as a second capacitor. The controller 62 then determines the amount of energy required to be absorbed by the first capacitor E_{LA} to move towards or reach its target energy level. This may be done by predicting the amount of energy required to be absorbed by the first capacitor E_{LA} based on the operation of the corresponding valve A-. Such prediction may be based on, for example, historic data on the operation of the corresponding valve A- and/or data on the designed operation of the corresponding valve A-.

After determining the amount of energy required to be absorbed by the first capacitor E_{LA} to move towards or reach its target energy level, the controller 62 controls the switching of the switching elements 54 in the valve A+ so as to store a buffer of energy in the second capacitor E_{UA} where the stored buffer of energy corresponds to the determined amount of energy required to be absorbed by the first capacitor E_{LA}. At this time the first capacitor E_{LA} may be disconnected from the second capacitor E_{UA}.

Thereafter, the controller 62 controls the switching of the switching elements 54 in the valves A+,A- of the first and second limb portions 38,40 to initiate the energy regulation process based on the "overlap mode" to force a common current I_{DC+AC} to flow through the first and second capacitors E_{LA}, E_{UA} so as to transfer the stored buffer of energy from the second capacitor E_{UA} to the first capacitor E_{LA}.

It is envisaged that, in other embodiments of the invention, the capacitor E_{UA} may be designated as the first capacitor, and the capacitor E_{LA} may be designated as the second capacitor. In such embodiments, the controller 62 determines the amount of energy required to be released by the first capacitor E_{UA} to move towards or reach its target energy level, controls the switching of the switching elements 54 in the valve A- so as to release energy to provide energy storage capacity in the second capacitor E_{LA} where the provided energy storage capacity corresponds to the determined amount of energy required to be released by the first capacitor E_{LA}, and then controls the switching of the switching elements 54 in the valves A+,A- of the first and second limb portions 38,40 to initiate the energy regulation process based on the "overlap mode" to force a common current I_{DC+AC} to flow through the first and second capacitors E_{LA},E_{UA} so as to transfer the energy from the first capacitor E_{UA} to the provided energy storage capacity of the second capacitor E_{LA}.

The following second exemplary operation of the controller 62 in the energy regulation mode is described with reference to the capacitors E_{LB},E_{UC}, but it will be understood that such operation applies mutatis mutandis to any two or more of the capacitors E_{UA},E_{LA}, E_{UB},E_{LB},E_{UC},E_{LC}.

When the capacitor Euc is below its target energy level, the capacitor E_{LB} could transfer part of its stored energy to the capacitor Euc to enable the capacitor Euc to move towards or reach its target energy level. However, it is possible that the capacitor Euc is connected out of circuit at a time instant tₖ, thus disconnecting the capacitor E_{UC} from the capacitor E_{LB} and thereby rendering it not possible to transfer energy from the capacitor E_{LB} to the capacitor E_{UC} at that instant of time.

Initially the controller 62 designates the capacitor Euc as a first capacitor, and designates the capacitor E_{LB} as a second capacitor. The controller 62 then determines the amount of energy required to be absorbed by the first capacitor E_{UC} to move towards or reach its target energy level. This may be done by predicting the amount of energy required to be absorbed by the first capacitor E_{UC} based on the operation of the corresponding valve C+. Such prediction may be based on, for example, historic data on the operation of the corresponding valve C+ and/or data on the designed operation of the corresponding valve C+.

After determining the amount of energy required to be absorbed by the first capacitor E_{UC} to move towards or reach its target energy level, the controller 62 controls the switching of the switching elements 54 in the valve B- so as to store a buffer of energy in the second capacitor E_{LB} where the stored buffer of energy corresponds to the determined amount of energy required to be absorbed by the first capacitor Euc.

Thereafter, the controller 62 controls the switching of the switching elements 54 in the valves B-,C+ of the first and second limb portions 38,40 to initiate the energy regulation process based on the "cross-overlap mode" to force a common current I_{CO} to flow through the first and second capacitors E_{UC},E_{LB} so as to transfer the stored buffer of energy from the second capacitor E_{LB} to the first capacitor Euc.

It is also envisaged that, in other embodiments of the invention, the capacitor E_{LB} may be designated as the first capacitor, and the capacitor E_{UC} may be designated as the second capacitor. In such embodiments, the controller 62 determines the amount of energy required to be released by the first capacitor E_{LB} to move towards or reach its target energy level, controls the switching of the switching elements 54 in the valve C+ so as to release energy to provide energy storage capacity in the second capacitor Euc where the provided energy storage capacity corresponds to the determined amount of energy required to be released by the first capacitor E_{LB}, and then controls the switching of the switching elements 54 in the valves B-,C+ of the first and second limb portions 38,40 to initiate the energy regulation process based on the "cross-overlap mode" to force a common current Ico to flow through the first and second capacitors E_{LB},E_{UC} so as to transfer the energy from the first capacitor E_{LB} to the provided energy storage capacity of the second capacitor Euc.

In each of the above exemplary operations of the controller 62 in the energy regulation mode, the determined amount of energy required to be released or absorbed by the first capacitor is taken into account by the controller 62 to compute the required overlap current I_{DC+AC} and circulating alternating current I_{CO}.

For example, the overlap current I_{DC+AC} and circulating alternating current Ico may be computed based on a model that considers the change (either positive or negative) in the energy level of each valve due to the respective changes (either positive or negative) in the alternating and direct currents circulating in the converter 30. The model may include a proportional-integral control that translates variations in an energy level error (i.e. a deviation from a target energy level) into a variation in the demanded current that is scaled by a factor. In this manner the controller 62 when operating in the energy regulation mode uses the deviation from the determined amount of energy required to be released or absorbed by the first capacitor to produce proportional changes in the alternating and direct currents circulating in the converter 30 in order to perform the energy regulation process.

The energy values used to compute the required overlap current I_{DC+AC} and circulating alternating current Ico may be in the form of average or instantaneous energy values. Optionally these energy values may be subject to signal processing techniques. An example of a suitable signal processing technique includes obtaining the sample mean of the energy levels of the valves 50 as calculated from a moving average filter, which produces an output which is the mean value of the calculated magnitude associated with the DC level in an oscillating signal. Other signal processing techniques may include obtaining the mean, variance, maximum and minimum values of the energy levels of the valves 50.

The provision of the controller 62 in the voltage source converter 30 of Figure 1 therefore permits the preparation of the stored energy buffer or provided energy storage capacity in advance of the energy regulation process and thereby improves the efficiency and reliability of the energy regulation process. This is because, without the advance preparation of the stored energy buffer or provided energy storage capacity, there is a risk that a lack of sufficient stored energy or energy storage capacity could arise during the energy regulation process, thus resulting in sub-optimal regulation of the energy levels of the capacitors 56 and thereby adversely affecting the performance of the voltage source converter 30.

In addition the ability to prepare the stored energy buffer or provided energy storage capacity in advance of the energy regulation process can be particularly advantageous under circumstances in which one or more capacitors 56 experiences a deviation in energy level beyond what is normally expected, since the additional level of deviation can be readily taken into account when determining the amount of energy required to be absorbed or released by the or each first capacitor to move towards or reach the target energy.

Although the above exemplary operations of the controller 62 in the energy regulation mode is described with reference to the equivalent capacitors E_{UA},E_{LA},E_{UB},E_{LB},E_{UC},E_{LC}, the invention may be performed on the basis of the designation of one or some of the capacitors 56, instead of all of the capacitors 56, in a given valve 50 as first or second capacitors.

It is envisaged that, in other embodiments of the invention, multiple capacitors 56 belonging to different valves 50 respectively may be designated as respective first capacitors and/or multiple capacitors 56 belonging to different valves 50 respectively may be designated as respective second capacitors when the controller 62 is operated in the energy regulation mode.

It is also envisaged that, in other embodiments of the invention in which multiple capacitors 56 are designated as respective first capacitors, the target energy level of at least one of the first capacitors may be different from the target energy level of at least one other of the first capacitors.

It will be appreciated that the aforementioned energy regulation processes based on the "overlap mode" and "cross-overlap mode" are merely chosen to illustrate the working of the invention, and that the invention may be performed using other energy regulation processes in which the switching of the switching elements 54 are controlled to force a common current to flow through two or more capacitors 56, and thereby connect the two or more capacitors 56 with one another, to enable the exchange of energy between the two or more capacitors 56.

It is envisaged that, in other embodiments of the invention, the director switch 49 may be omitted from each limb portion 38,40.

It will be understood that the topology of the voltage source converter 30 of the above-described specific embodiment of the invention is merely chosen as a non-limiting example to describe the principle of the invention, and that the invention is applicable to other voltage source converter topologies in which the voltage source converter comprises: a plurality of terminals; and a plurality of switching elements and a plurality of energy storage devices connected between the plurality of terminals, each energy storage device for storing and releasing energy to provide a voltage, the plurality of switching elements arranged to be switchable to control flow of current through each energy storage device.

## Claims

1. A voltage source converter (30) comprising:
- first and second DC terminals (32, 34) for connection to a DC network (44);
- an AC terminal (42) for connection to an AC network (46);
- a converter limb (36) extending between the first and second DC terminals (32, 34), the converter limb including first and second limb portions (38, 40) separated by the AC terminal (42), each limb portion comprising a plurality of switching elements (54) and a plurality of energy storage devices (56), each energy storage device (56) for storing and releasing energy to provide a voltage, the plurality of switching elements (54) arranged to be switchable to control flow of current through each energy storage device (56); and
- a controller (62) programmed to operate in an energy regulation mode to:
{i} designate one or more of the plurality of energy storage devices (56) as a respective first energy storage device (E_{UC}), and designate one or more other of the plurality of energy storage devices as a respective second energy storage device (E_{LB}); and
{ii} determine the amount of energy required to be absorbed or released by the or each first energy storage device (E_{UC}) to move towards or reach a target energy level; the controller (62) is further programmed to operate in the energy regulation mode to:
{iii} control the switching of the plurality of switching elements (54) to force a current to flow through the or each second energy storage device (E_{LB}) so as to store a buffer of energy in the or each second energy storage device (E_{LB}) or release energy to provide energy storage capacity in the or each second energy storage device (E_{LB}), wherein the stored buffer of energy or the provided energy storage capacity in the or each second energy storage device (E_{LB}) corresponds to the determined amount of energy required to be absorbed or released by the or each first energy storage device (E_{UC}); and
{iv} control the switching of the plurality of switching elements (54) to force a common current to flow through the first and second energy storage devices (E_{UC},E_{LB}) so as to: transfer the stored buffer of energy from the or each second energy storage device (E_{LB}) to the or each first energy storage device (E_{UC}); or transfer energy from the or each first energy storage device (E_{UC}) to the provided energy storage capacity of the or each second energy storage device (E_{LB}).

2. A voltage source converter according to Claim 1, wherein the controller (62) is programmed to operate in the energy regulation mode to control the switching of the plurality of switching elements (54) to force a current to flow through the or each second energy storage device (E_{LB}) so as to store a buffer of energy in the or each second energy storage device (E_{LB}) or release energy to provide energy storage capacity in the or each second energy storage device (E_{LB}) when the or each first energy storage device (E_{UC}) is disconnected from the or each second energy storage device (E_{LB}).

3. A voltage source converter according to Claim 1 or Claim 2, wherein the controller (62) is programmed to operate in the energy regulation mode to control the switching of the plurality of switching elements (54) to selectively permit and inhibit flow of current through each energy storage device (56) in order to control the transfer of power between the terminals concurrently with the operation of the controller in the energy regulation mode.

4. A voltage source converter according to any one of the preceding claims, wherein the target energy level of the or each first energy storage device (E_{UC}) is the average of the energy levels of some or all of the plurality of energy storage devices (56).

5. A voltage source converter according to any one of the preceding claims, wherein the target energy level of the or each first energy storage device (E_{UC}) is a portion of its maximum energy storage capacity.

6. A voltage source converter according to any one of the preceding claims, wherein when multiple energy storage devices (56) are designated as respective first energy storage devices (E_{UC}), the target energy level of at least one of the first energy storage devices (E_{UC}) is the same as or different from the target energy level of at least one other of the first energy storage devices (E_{UC}).

7. A voltage source converter according to any one of the preceding claims, wherein the amount of energy required to be absorbed or released by the or each first energy storage device (E_{UC}) to move towards or reach a target energy level is the amount of energy required to be absorbed or released by the or each first energy storage device (E_{UC}) to balance the energy levels of the first and second energy storage devices (E_{UC}, E_{LB}).

8. A voltage source converter according to any one of the preceding claims, wherein the controller (62) is programmed to operate in the energy regulation mode to determine the amount of energy required to be absorbed or released by the or each first energy storage device (E_{UC}) to move towards or reach a target energy level by predicting the amount of energy required to be absorbed or released by the or each first energy storage device (E_{UC}) to move towards or reach a target energy level.

9. A voltage source converter according to Claim 8, wherein predicting the amount of energy required to be absorbed or released by the or each first energy storage device (E_{UC}) to move towards or reach a target energy level includes predicting the amount of energy required to be absorbed or released by the or each first energy storage device (E_{UC}) based on the operation of the voltage source converter (200).

10. A voltage source converter according to Claim 8 or Claim 9, wherein predicting the amount of energy required to be absorbed or released by the or each first energy storage device (E_{UC}) to move towards or reach a target energy level includes predicting the amount of energy required to be absorbed or released by the or each first energy storage device based on historic data on the operation of the voltage source converter and/or data on the designed operation of the voltage source converter.

11. A voltage source converter according to any one of the preceding claims, including a plurality of modules (52) connected between the plurality of terminals, each module including at least one of the plurality of switching elements (54) and at least one of the plurality of energy storage devices (56), the or each switching element (54) and the or each energy storage device (56) in each module (52) arranged to be combinable to selectively provide a voltage source.

12. A voltage source converter according to any one of the preceding claims, including a plurality of valves (50), each valve including at least one of the plurality of switching elements (54) and at least one of the plurality of energy storage devices (56), the or each switching element (54) in each valve (50) being switchable to selectively permit and inhibit flow of current through the or each corresponding energy storage device (56) in order to control a voltage across the corresponding valve (50), wherein the controller (62) is programmed to operate in the energy regulation mode to designate the energy storage device (56) or at least one of the energy storage devices (56) in one or more of the plurality of valves (50) as a respective first energy storage device (56), and designate the energy storage device (56) or at least one of the energy storage devices (56) in one or more other of the plurality of valves (50) as a respective second energy storage device (56).

13. A voltage source converter according to Claims 11 and 12, wherein each valve (50) includes at least one of the plurality of modules (52).

14. A voltage source converter according to Claim 12 or Claim 13, wherein each limb portion (38,40) of the converter limb (36)
includes a respective one of the plurality of valves (50), and the controller (62) is programmed to operate in the energy regulation mode to:
{i} designate the energy storage device (56) or at least one of the energy storage devices (56) in the valve (50) of one of the first and second limb portions (38,40) as a respective first energy storage device (56), and designate the energy storage device (56) or at least one of the energy storage devices (56) in the valve (50) of the other of the first and second limb portions (38,40) as a respective second energy storage device (56); and
{ii} control the switching of the switching elements (54) in the valves (50) of the first and second limb portions (38,40) to force a common current to flow through the first and second energy storage devices (56) so as to: transfer the stored buffer of energy from the or each second energy storage device (56) to the or each first energy storage device (56); or transfer energy from the or each first energy storage device (56) to the provided energy storage capacity of the or each second energy storage device (56).

15. A voltage source converter according to Claim 14, wherein the control of the switching of the switching elements (54) in the valves (50) of the first and second limb portions (38,40) to force a common current to flow through the first and second energy storage devices (56) includes the control of the switching of the switching elements (54) in the valves (50) of the first and second limb portions (38,40) to form a current circulation path in which the common current circulates through the limb portions (38,40) of the converter limb (36) and the DC network (44).

16. A voltage source converter according to any one of Claims 12 to 15, wherein the voltage source converter includes a plurality of converter limbs (36), the AC terminal (42) of each converter limb (36) for connection to a respective phase of a multi-phase AC network (46), at least one of the limb portions (38,40) of each converter limb (36) including a respective one of the plurality of valves (50), and the controller (62) is programmed to operate in the energy regulation mode to:
{i} designate the energy storage device (56) or at least one of the energy storage devices (56) in at least one selected valve (50) of one of the plurality of converter limbs (36) as a respective first energy storage device (56), and designate the energy storage device (56) or at least one of the energy storage devices (56) in at least one selected valve (50) of another of the plurality of converter limbs (56) as a respective second energy storage device (56); and
{ii} control the switching of the switching elements (54) in the selected valves (50) to force a common current to flow through the first and second energy storage devices (56) so as to: transfer the stored buffer of energy from the or each second energy storage device (56) to the or each first energy storage device (56); or transfer energy from the or each first energy storage device (56) to the provided energy storage capacity of the or each second energy storage device (56).

17. A voltage source converter according to Claim 16, wherein the control of the switching elements (54) in the selected valves (50) to force a common current to flow through the first and second energy storage devices (56) includes the control of the switching elements (54) in the selected valves (50) to form a current circulation path in which the common current circulates through the selected valves (50), the AC phases connected to the AC terminals (42) of the converter limbs (36) with the selected valves (50); and the DC network (44).

18. A method of operating a voltage source converter (30), wherein the voltage source converter (30) comprising:
- first and second DC terminals (32, 34) for connection to a DC network (44);
- an AC terminal (42) for connection to an AC network (46);
- a converter limb (36) extending between the first and second DC terminals (32, 34), the converter limb including first and second limb portions (38, 40) separated by the AC terminal (42), each limb portion comprising a plurality of switching elements (54) and a plurality of energy storage devices (56), each energy storage device (56) for storing and releasing energy to provide a voltage, the plurality of switching elements (54) arranged to be switchable to control flow of current through each energy storage device (56),
wherein the method comprises operating in an energy regulation mode that includes the steps of:
{i} designating one or more of the plurality of energy storage devices (56) as a respective first energy storage device (56), and designating one or more other of the plurality of energy storage devices (56) as a respective second energy storage device (56); and
{ii} determining the amount of energy required to be absorbed or released by the or each first energy storage device (56) to move towards or reach a target energy level; the energy regulation mode further includes the steps of:
{iii} controlling the switching of the plurality of switching elements (54) to force a current to flow through the or each second energy storage device (56) so as to store a buffer of energy in the or each second energy storage device (56) or release energy to provide energy storage capacity in the or each second energy storage device (56), wherein the stored buffer of energy or the provided energy storage capacity in the or each second energy storage device (56) corresponds to the determined amount of energy required to be absorbed or released by the or each first energy storage device (56); and
{iv} controlling the switching of the plurality of switching elements (54) to force a common current to flow through the first and second energy storage devices (56) so as to: transfer the stored buffer of energy from the or each second energy storage device (54) to the or each first energy storage device (56); or transfer energy from the or each first energy storage device (56) to the provided energy storage capacity of the or each second energy storage device (56).

## Patentansprüche

1. Spannungsquellenwandler (30), umfassend:
- einen ersten und einen zweiten Gleichstromanschluss (32, 34) zum Anschließen an ein Gleichstromnetzwerk (44);
- einen Wechselstromanschluss (42) zum Anschließen an ein Wechselstromnetzwerk (46);
- einen Wandlerschenkel (36), der sich zwischen dem ersten und dem zweiten Gleichstromanschluss (32, 34) erstreckt, wobei der Wandlerschenkel einen ersten und einen zweiten Schenkelabschnitt (38, 40) einschließt, die durch den Wechselstromanschluss (42) getrennt sind, wobei jeder Schenkelabschnitt eine Vielzahl von Schaltelementen (54) und eine Vielzahl von Energiespeichervorrichtungen (56) umfasst, wobei jede Energiespeichervorrichtung (56) dafür dient, Energie zu speichern und abzugeben, um eine Spannung bereitzustellen, wobei die Vielzahl von Schaltelementen (54) so eingerichtet sind, dass sie geschaltet werden können, um Stromfluss durch jede Energiespeichervorrichtung (56) zu steuern; und
- eine Steuerung (62), die so programmiert ist, dass sie in einem Energieregelungsmodus so arbeitet, dass sie:
{i} eine oder mehrere aus der Vielzahl von Energiespeichervorrichtungen (56) als eine jeweilige erste Energiespeichervorrichtung (E_{UC}) festlegt, und eine oder mehrere andere aus der Vielzahl von Energiespeichervorrichtungen als eine jeweilige zweite Energiespeichervorrichtung (E_{LB}) festlegt; und
{ii} den Energiebetrag bestimmt, der von der oder jeder ersten Energiespeichervorrichtung (E_{UC}) aufgenommen oder abgegeben werden muss, um sich in Richtung eines Zielenergiepegels zu bewegen oder diesen zu erreichen;
die Steuerung (62) weiter so programmiert ist, dass sie im Energieregelungsmodus so arbeitet, dass sie:
{iii} das Schalten der Vielzahl von Schaltelementen (54) so steuert, dass ein Strom gezwungen wird, durch die oder jede zweite Energiespeichervorrichtung (E_{LB}) zu fließen, um einen Energiepuffer in der oder jeder zweiten Energiespeichervorrichtung (E_{LB}) zu speichern, oder Energie abgegeben wird, um Energiespeicherkapazität in der oder jeder zweiten Energiespeichervorrichtung (E_{LB}) bereitzustellen, wobei der gespeicherte Energiepuffer oder die bereitgestellte Energiespeicherkapazität in der oder jeder zweiten Energiespeichervorrichtung (E_{LB}) dem bestimmten Energiebetrag entspricht, der von der oder jeder ersten Energiespeichervorrichtung (E_{UC}) aufgenommen oder abgegeben werden muss; und
{iv} das Schalten der Vielzahl von Schaltelementen (54) so steuert, dass ein gemeinsamer Strom gezwungen wird, durch die ersten und zweiten Energiespeichervorrichtungen (E_{UC}, E_{LB}) zu fließen, um: den gespeicherten Energiepuffer aus der oder jeder zweiten Energiespeichervorrichtung (E_{LB}) zu der oder jeder ersten Energiespeichervorrichtung (E_{UC}) zu übertragen; oder Energie aus der oder jeder ersten Energiespeichervorrichtung (E_{UC}) zu der bereitgestellten Energiespeicherkapazität der oder jeder zweiten Energiespeichervorrichtung (E_{LB}) zu übertragen.

2. Spannungsquellenwandler nach Anspruch 1, wobei die Steuerung (62) so programmiert ist, dass sie im Energieregelungsmodus so arbeitet, dass sie das Schalten der Vielzahl von Schaltelementen (54) so steuert, dass ein Strom gezwungen wird, durch die oder jede zweite Energiespeichervorrichtung (E_{LB}) zu fließen, um einen Energiepuffer in der oder jeder zweiten Energiespeichervorrichtung (E_{LB}) zu speichern, oder Energie abgegeben wird, um Energiespeicherkapazität in der oder jeder zweiten Energiespeichervorrichtung (E_{LB}) bereitzustellen, wenn die oder jede erste Energiespeichervorrichtung (E_{UC}) von der oder jeder zweiten Energiespeichervorrichtung (E_{LB}) getrennt ist.

3. Spannungsquellenwandler nach Anspruch 1 oder Anspruch 2, wobei die Steuerung (62) so programmiert ist, dass sie im Energieregelungsmodus so arbeitet, dass sie das Schalten der Vielzahl von Schaltelementen (54) so steuert, dass Stromfluss durch jede Energiespeichervorrichtung (56) selektiv ermöglicht und unterbunden wird, um gleichzeitig mit dem Betrieb der Steuerung im Energieregelungsmodus die Übertragung von Leistung zwischen den Anschlüssen zu steuern.

4. Spannungsquellenwandler nach einem der vorstehenden Ansprüche, wobei es sich beim Zielenergiepegel der oder jeder ersten Energiespeichervorrichtung (E_{UC}) um den Durchschnitt der Energiepegel einiger oder aller aus der Vielzahl von Energiespeichervorrichtungen (56) handelt.

5. Spannungsquellenwandler nach einem der vorstehenden Ansprüche, wobei es sich beim Zielenergiepegel der oder jeder ersten Energiespeichervorrichtung (E_{UC}) um einen Teil ihrer maximalen Energiespeicherkapazität handelt.

6. Spannungsquellenwandler nach einem der vorstehenden Ansprüche, wobei, wenn mehrere Energiespeichervorrichtungen (56) als jeweilige erste Energiespeichervorrichtungen (E_{UC}) festgelegt werden, der Zielenergiepegel mindestens einer der ersten Energiespeichervorrichtungen (E_{UC}) gleich oder ungleich dem Zielenergiepegel mindestens einer anderen der ersten Energiespeichervorrichtungen (E_{UC}) ist.

7. Spannungsquellenwandler nach einem der vorstehenden Ansprüche, wobei es sich bei dem Energiebetrag, der von der oder jeder ersten Energiespeichervorrichtung (E_{UC}) aufgenommen oder abgegeben werden muss, um sich in Richtung eines Zielenergiepegels zu bewegen oder diesen zu erreichen, um den Energiebetrag handelt, der von der oder jeder ersten Energiespeichervorrichtung (E_{UC}) aufgenommen oder abgegeben werden muss, um die Energiepegel der ersten und zweiten Energiespeichervorrichtungen (E_{UC}, E_{LB}) auszugleichen.

8. Spannungsquellenwandler nach einem der vorstehenden Ansprüche, wobei die Steuerung (62) so programmiert ist, dass sie im Energieregelungsmodus so arbeitet, dass sie den Energiebetrag, der von der oder jeder ersten Energiespeichervorrichtung (E_{UC}) aufgenommen oder abgegeben werden muss, um sich in Richtung eines Zielenergiepegels zu bewegen oder diesen zu erreichen, bestimmt, indem sie den Energiebetrag, der von der oder jeder ersten Energiespeichervorrichtung (E_{UC}) aufgenommen oder abgegeben werden muss, um sich in Richtung eines Zielenergiepegels zu bewegen oder diesen zu erreichen, vorhersagt.

9. Spannungsquellenwandler nach Anspruch 8, wobei das Vorhersagen des Energiebetrags, der von der oder jeder ersten Energiespeichervorrichtung (E_{UC}) aufgenommen oder abgegeben werden muss, um sich in Richtung eines Zielenergiepegels zu bewegen oder diesen zu erreichen, das Vorhersagen des Energiebetrags, der von der oder jeder ersten Energiespeichervorrichtung (E_{UC}) aufgenommen oder abgegeben werden muss, auf Basis des Betriebs des Spannungsquellenwandlers (200) einschließt.

10. Spannungsquellenwandler nach Anspruch 8 oder Anspruch 9, wobei das Vorhersagen des Energiebetrags, der von der oder jeder ersten Energiespeichervorrichtung (E_{UC}) aufgenommen oder abgegeben werden muss, um sich in Richtung eines Zielenergiepegels zu bewegen oder diesen zu erreichen, das Vorhersagen des Energiebetrags, der von der oder jeder ersten Energiespeichervorrichtung aufgenommen oder abgegeben werden muss, auf Basis von Verlaufsdaten bezüglich des Betriebs des Spannungsquellenwandlers und/oder Daten bezüglich des vorgesehenen Betriebs des Spannungsquellenwandlers einschließt.

11. Spannungsquellenwandler nach einem der vorstehenden Ansprüche, der eine Vielzahl von Modulen (52) einschließt, die zwischen die Vielzahl von Anschlüssen geschaltet sind, wobei jedes Modul mindestens eines aus der Vielzahl von Schaltelementen (54) und mindestens eine aus der Vielzahl von Energiespeichervorrichtungen (56) einschließt, wobei das oder jedes Schaltelement (54) und die oder jede Energiespeichervorrichtung (56) in jedem Modul (52) so eingerichtet sind, dass sie kombiniert werden können, um selektiv eine Spannungsquelle bereitzustellen.

12. Spannungsquellenwandler nach einem der vorstehenden Ansprüche, der eine Vielzahl von Ventilen (50) einschließt, wobei jedes Ventil mindestens eines aus der Vielzahl von Schaltelementen (54) und mindestens eine aus der Vielzahl von Energiespeichervorrichtungen (56) einschließt, wobei das oder jedes Schaltelement (54) in jedem Ventil (50) so geschaltet werden kann, dass Stromfluss durch die oder jede entsprechende Energiespeichervorrichtung (56) selektiv ermöglicht und unterbunden wird, um eine Spannung über dem entsprechenden Ventil (50) zu steuern, wobei die Steuerung (62) so programmiert ist, dass sie im Energieregelungsmodus so arbeitet, dass sie die Energiespeichervorrichtung (56) oder mindestens eine der Energiespeichervorrichtungen (56) in einem oder mehreren aus der Vielzahl von Ventilen (50) als eine jeweilige erste Energiespeichervorrichtung (56) festlegt, und die Energiespeichervorrichtung (56) oder mindestens eine der Energiespeichervorrichtungen (56) in einem oder mehreren anderen aus der Vielzahl von Ventilen (50) als eine jeweilige zweite Energiespeichervorrichtung (56) festlegt.

13. Spannungsquellenwandler nach den Ansprüchen 11 und 12, wobei jedes Ventil (50) mindestens eines aus der Vielzahl von Modulen (52) einschließt.

14. Spannungsquellenwandler nach Anspruch 12 oder Anspruch 13, wobei jeder Schenkelabschnitt (38, 40) des Wandlerschenkels (36) ein jeweiliges aus der Vielzahl von Ventilen (50) einschließt, und die Steuerung (62) so programmiert ist, dass sie im Energieregelungsmodus so arbeitet, dass sie:
{i} die Energiespeichervorrichtung (56) oder mindestens eine der Energiespeichervorrichtungen (56) im Ventil (50) von einem aus dem ersten und dem zweiten Schenkelabschnitt (38, 40) als eine jeweilige erste Energiespeichervorrichtung (56) festlegt, und die Energiespeichervorrichtung (56) oder mindestens eine der Energiespeichervorrichtungen (56) im Ventil (50) des anderen aus dem ersten und dem zweiten Schenkelabschnitt (38, 40) als eine jeweilige zweite Energiespeichervorrichtung (56) festlegt; und
{ii} das Schalten der Schaltelemente (54) in den Ventilen (50) des ersten und des zweiten Schenkelabschnitts (38, 40) so steuert, dass ein gemeinsamer Strom gezwungen wird, durch die ersten und zweiten Energiespeichervorrichtungen (56) zu fließen, um: den gespeicherten Energiepuffer aus der oder jeder zweiten Energiespeichervorrichtung (56) zu der oder jeder ersten Energiespeichervorrichtung (56) zu übertragen; oder Energie aus der oder jeder ersten Energiespeichervorrichtung (56) zu der bereitgestellten Energiespeicherkapazität der oder jeder zweiten Energiespeichervorrichtung (56) zu übertragen.

15. Spannungsquellenwandler nach Anspruch 14, wobei das Steuern des Schaltens der Schaltelemente (54) in den Ventilen (50) des ersten und des zweiten Schenkelabschnitts (38, 40) so, dass ein gemeinsamer Strom gezwungen wird, durch die ersten und die zweiten Energiespeichervorrichtungen (56) zu fließen, das Steuern des Schaltens der Schaltelemente (54) in den Ventilen (50) des ersten und des zweiten Schenkelabschnitts (38, 40) so einschließt, dass ein Stromzirkulationspfad gebildet wird, in dem der gemeinsame Strom durch die Schenkelabschnitte (38, 40) des Wandlerschenkels (36) und das Gleichstromnetzwerk (44) zirkuliert.

16. Spannungsquellenwandler nach einem der Ansprüche 12 bis 15, wobei der Spannungsquellenwandler eine Vielzahl von Wandlerschenkeln (36) einschließt, der Wechselstromanschluss (42) jedes Wandlerschenkels (36) zum Anschließen an eine jeweilige Phase eines Mehrphasenwechselstromnetzwerks (46) dient, mindestens einer der Schenkelabschnitte (38, 40) jedes Wandlerschenkels (36) ein jeweiliges aus der Vielzahl von Ventilen (50) einschließt, und die Steuerung (62) so programmiert ist, dass sie im Energieregelungsmodus so arbeitet, dass sie:
{i} die Energiespeichervorrichtung (56) oder mindestens eine der Energiespeichervorrichtungen (56) in mindestens einem ausgewählten Ventil (50) eines aus der Vielzahl von Wandlerschenkeln (36) als eine jeweilige erste Energiespeichervorrichtung (56) festlegt, und die Energiespeichervorrichtung (56) oder mindestens eine der Energiespeichervorrichtungen (56) in mindestens einem ausgewählten Ventil (50) eines anderen aus der Vielzahl von Wandlerschenkeln (56) als eine jeweilige zweite Energiespeichervorrichtung (56) festlegt; und
{ii} das Schalten der Schaltelemente (54) in den ausgewählten Ventilen (50) so steuert, dass ein gemeinsamer Strom gezwungen wird, durch die ersten und die zweiten Energiespeichervorrichtungen (56) zu fließen, um: den gespeicherten Energiepuffer aus der oder jeder zweiten Energiespeichervorrichtung (56) zu der oder jeder ersten Energiespeichervorrichtung (56) zu übertragen; oder Energie aus der oder jeder ersten Energiespeichervorrichtung (56) zu der bereitgestellten Energiespeicherkapazität der oder jeder zweiten Energiespeichervorrichtung (56) zu übertragen.

17. Spannungsquellenwandler nach Anspruch 16, wobei das Steuern der Schaltelemente (54) in den ausgewählten Ventilen (50) so, dass ein gemeinsamer Strom gezwungen wird, durch die ersten und die zweiten Energiespeichervorrichtungen (56) zu fließen, das Steuern der Schaltelement (54) in den ausgewählten Ventilen (50) so einschließt, dass ein Stromzirkulationspfad gebildet wird, in dem der gemeinsame Strom durch die ausgewählten Ventile (50), die an die Wechselstromanschlüsse (42) der Wandlerschenkel (36) mit den ausgewählten Ventilen (50) angeschlossenen Wechselstromphasen; und das Gleichstromnetzwerk (44) zirkuliert.

18. Verfahren zum Betreiben eines Spannungsquellenwandlers (30), wobei der Spannungsquellenwandler (30) umfasst:
- einen ersten und einen zweiten Gleichstromanschluss (32, 34) zum Anschließen an ein Gleichstromnetzwerk (44);
- einen Wechselstromanschluss (42) zum Anschließen an ein Wechselstromnetzwerk (46);
- einen Wandlerschenkel (36), der sich zwischen dem ersten und dem zweiten Gleichstromanschluss (32, 34) erstreckt, wobei der Wandlerschenkel einen ersten und einen zweiten Schenkelabschnitt (38, 40) einschließt, die durch den Wechselstromanschluss (42) getrennt sind, wobei jeder Schenkelabschnitt eine Vielzahl von Schaltelementen (54) und eine Vielzahl von Energiespeichervorrichtungen (56) umfasst, wobei jede Energiespeichervorrichtung (56) dafür dient, Energie zu speichern und abzugeben, um eine Spannung bereitzustellen, wobei die Vielzahl von Schaltelementen (54) so eingerichtet sind, dass sie geschaltet werden können, um Stromfluss durch jede Energiespeichervorrichtung (56) zu steuern,
wobei das Verfahren das Betreiben in einem Energieregelungsmodus umfasst, der die Schritte einschließt des:
{i} Festlegens einer oder mehrerer aus der Vielzahl von Energiespeichervorrichtungen (56) als eine jeweilige erste Energiespeichervorrichtung (56), und Festlegens einer oder mehrerer anderer aus der Vielzahl von Energiespeichervorrichtungen (56) als eine jeweilige zweite Energiespeichervorrichtung (56); und
{ii} Bestimmens des Energiebetrags, der von der oder jeder ersten Energiespeichervorrichtung (56) aufgenommen oder abgegeben werden muss, um sich in Richtung eines Zielenergiepegels zu bewegen oder diesen zu erreichen;
der Energieregelungsmodus weiter die Schritte einschließt des:
{iii} Steuerns des Schaltens der Vielzahl von Schaltelementen (54) so, dass ein Strom gezwungen wird, durch die oder jede zweite Energiespeichervorrichtung (56) zu fließen, um einen Energiepuffer in der oder jeder zweiten Energiespeichervorrichtung (56) zu speichern, oder Energie abgegeben wird, um Energiespeicherkapazität in der oder jeder zweiten Energiespeichervorrichtung (56) bereitzustellen, wobei der gespeicherte Energiepuffer oder die bereitgestellte Energiespeicherkapazität in der oder jeder zweiten Energiespeichervorrichtung (56) dem bestimmten Energiebetrag entspricht, der von der oder jeder ersten Energiespeichervorrichtung (56) aufgenommen oder abgegeben werden muss; und
{iv} Steuerns des Schaltens der Vielzahl von Schaltelementen (54) so, dass ein gemeinsamer Strom gezwungen wird, durch die ersten und die zweiten Energiespeichervorrichtungen (56) zu fließen, um: den gespeicherten Energiepuffer aus der oder jeder zweiten Energiespeichervorrichtung (54) zu der oder jeder ersten Energiespeichervorrichtung (56) zu übertragen; oder Energie aus der oder jeder ersten Energiespeichervorrichtung (56) zu der bereitgestellten Energiespeicherkapazität der oder jeder zweiten Energiespeichervorrichtung (56) zu übertragen.

## Revendications

1. Convertisseur de source de tension (30) comprenant :
- des première et seconde bornes de courant continue, CC, (32, 34) pour une connexion à un réseau CC (44) ;
- une borne de courant alternatif, CA, (42) pour une connexion à un réseau CA (46) ;
- une branche de convertisseur (36) s'étendant entre les première et seconde bornes CC (32, 34), la branche de convertisseur incluant des première et seconde parties de branche (38, 40) séparées par la borne CA (42), chaque partie de branche comprenant une pluralité d'éléments de commutation (54) et une pluralité de dispositifs de stockage d'énergie (56), chaque dispositif de stockage d'énergie (56) pour stocker et libérer de l'énergie pour fournir une tension, la pluralité d'éléments de commutation (54) agencés pour pouvoir être commutés pour commander une circulation de courant à travers chaque dispositif de stockage d'énergie (56) ; et
- un dispositif de commande (62) programmé pour fonctionner dans un mode de régulation d'énergie pour :
{i} désigner un ou plusieurs de la pluralité de dispositifs de stockage d'énergie (56) en tant que premier dispositif de stockage d'énergie respectif (Eue), et désigner un ou plusieurs autres de la pluralité de dispositifs de stockage d'énergie en tant que second dispositif de stockage d'énergie respectif (E_{LB}) ; et
{ii} déterminer la quantité d'énergie requise devant être absorbée ou libérée par le ou chaque premier dispositif de stockage d'énergie (Eue) pour se rapprocher de ou atteindre un niveau d'énergie cible ;
le dispositif de commande (62) est en outre programmé pour fonctionner dans le mode de régulation d'énergie pour :
{iii} commander la commutation de la pluralité d'éléments de commutation (54) pour forcer un courant à circuler à travers le ou chaque second dispositif de stockage d'énergie (E_{LB}) de manière à stocker un tampon d'énergie dans le ou chaque second dispositif de stockage d'énergie (E_{LB}) ou libérer de l'énergie pour fournir une capacité de stockage d'énergie dans le ou chaque second dispositif de stockage d'énergie (E_{LB}), dans lequel le tampon d'énergie stocké ou la capacité de stockage d'énergie fournie dans le ou chaque second dispositif de stockage d'énergie (E_{LB}) correspond à la quantité déterminée d'énergie requise devant être absorbée ou libérée par le ou chaque premier dispositif de stockage d'énergie (Eue) ; et
{iv} commander la commutation de la pluralité d'éléments de commutation (54) pour forcer un courant commun à circuler à travers les premier et second dispositifs de stockage d'énergie (E_{UC}, E_{LB}) de manière à : transférer le tampon d'énergie stocké à partir du ou de chaque second dispositif de stockage d'énergie (E_{LB}) au ou à chaque premier dispositif de stockage d'énergie (E_{UC}) ; ou transférer de l'énergie à partir du ou de chaque premier dispositif de stockage d'énergie (E_{UC}) à la capacité de stockage d'énergie fournie du ou de chaque second dispositif de stockage d'énergie (E_{LB}).

2. Convertisseur de source de tension selon la revendication 1, dans lequel le dispositif de commande (62) est programmé pour fonctionner dans le mode de régulation d'énergie pour commander la commutation de la pluralité d'éléments de commutation (54) pour forcer un courant à circuler à travers le ou chaque second dispositif de stockage d'énergie (E_{LB}) de manière à stocker un tampon d'énergie dans le ou chaque second dispositif de stockage d'énergie (E_{LB}) ou libérer de l'énergie pour fournir une capacité de stockage d'énergie dans le ou chaque second dispositif de stockage d'énergie (E_{LB}) lorsque le ou chaque premier dispositif de stockage d'énergie (Eue) est déconnecté du ou chaque second dispositif de stockage d'énergie (E_{LB}).

3. Convertisseur de source de tension selon la revendication 1 ou la revendication 2, dans lequel le dispositif de commande (62) est programmé pour fonctionner dans le mode de régulation d'énergie pour commander la commutation de la pluralité d'éléments de commutation (54) pour permettre et inhiber sélectivement une circulation de courant à travers chaque dispositif de stockage d'énergie (56) afin de commander le transfert de puissance entre les bornes simultanément avec le fonctionnement du dispositif de commande dans le mode de régulation d'énergie.

4. Convertisseur de source de tension selon l'une quelconque des revendications précédentes, dans lequel le niveau d'énergie cible du ou de chaque premier dispositif de stockage d'énergie (E_{UC}) est la moyenne des niveaux d'énergie de certains ou de la totalité de la pluralité de dispositifs de stockage d'énergie (56).

5. Convertisseur de source de tension selon l'une quelconque des revendications précédentes, dans lequel le niveau d'énergie cible du ou de chaque premier dispositif de stockage d'énergie (E_{UC}) est une partie de sa capacité de stockage d'énergie maximum.

6. Convertisseur de source de tension selon l'une quelconque des revendications précédentes, dans lequel lorsque de multiples dispositifs de stockage d'énergie (56) sont désignés en tant que premiers dispositifs de stockage d'énergie respectifs (Eue), le niveau d'énergie cible d'au moins l'un des premiers dispositifs de stockage d'énergie (Eue) est le même que ou différent du niveau d'énergie cible d'au moins un autre des premiers dispositifs de stockage d'énergie (Eue).

7. Convertisseur de source de tension selon l'une quelconque des revendications précédentes, dans lequel la quantité d'énergie requise devant être absorbée ou libérée par le ou chaque premier dispositif de stockage d'énergie (Eue) pour se rapprocher de ou atteindre un niveau d'énergie cible est la quantité d'énergie requise devant être absorbée ou libérée par le ou chaque premier dispositif de stockage d'énergie (Eue) pour équilibrer les niveaux d'énergie des premier et second dispositifs de stockage d'énergie (E_{UC}, E_{LB}).

8. Convertisseur de source de tension selon l'une quelconque des revendications précédentes, dans lequel le dispositif de commande (62) est programmé pour fonctionner dans le mode de régulation d'énergie pour déterminer la quantité d'énergie requise devant être absorbée ou libérée par le ou chaque premier dispositif de stockage d'énergie (E_{UC}) pour se rapprocher de ou atteindre un niveau d'énergie cible en prédisant la quantité d'énergie requise devant être absorbée ou libérée par le ou chaque premier dispositif de stockage d'énergie (E_{UC}) pour se rapprocher de ou atteindre un niveau d'énergie cible.

9. Convertisseur de source de tension selon la revendication 8, dans lequel la prédiction de la quantité d'énergie requise devant être absorbée ou libérée par le ou chaque premier dispositif de stockage d'énergie (Eue) pour se rapprocher ou atteindre un niveau d'énergie cible inclut une prédiction de la quantité d'énergie requise devant être absorbée ou libérée par le ou chaque premier dispositif de stockage d'énergie (E_{UC}) sur la base du fonctionnement du convertisseur de source de tension (200).

10. Convertisseur de source de tension selon la revendication 8 ou la revendication 9, dans lequel la prédiction de la quantité d'énergie requise devant être absorbée ou libérée par le ou chaque premier dispositif de stockage d'énergie (E_{UC}) pour se rapprocher ou atteindre un niveau d'énergie cible inclut une prédiction de la quantité d'énergie requise devant être absorbée ou libérée par le ou chaque premier dispositif de stockage d'énergie sur la base de données historiques sur le fonctionnement du convertisseur de source de tension et/ou de données sur le fonctionnement conçu du convertisseur de source de tension.

11. Convertisseur de source de tension selon l'une quelconque des revendications précédentes, incluant une pluralité de modules (52) connectés entre la pluralité de bornes, chaque module incluant au moins l'un de la pluralité d'éléments de commutation (54) et au moins l'un de la pluralité de dispositifs de stockage d'énergie (56), le ou chaque élément de commutation (54) et le ou chaque dispositif de stockage d'énergie (56) dans chaque module (52) agencés pour pouvoir être combinés pour fournir sélectivement une source de tension.

12. Convertisseur de source de tension selon l'une quelconque des revendications précédentes, incluant une pluralité de valves (50), chaque valve incluant au moins l'un de la pluralité d'éléments de commutation (54) et au moins l'un de la pluralité de dispositifs de stockage d'énergie (56), le ou chaque élément de commutation (54) dans chaque valve (50) pouvant être commuté pour permettre et inhiber sélectivement une circulation de courant à travers le ou chaque dispositif de stockage d'énergie correspondant (56) afin de commander une tension aux bornes de la valve correspondante (50), dans lequel le dispositif de commande (62) est programmé pour fonctionner dans le mode de régulation d'énergie pour désigner le dispositif de stockage d'énergie (56) ou au moins l'un des dispositifs de stockage d'énergie (56) dans une ou plusieurs de la pluralité de valves (50) en tant que premier dispositif de stockage d'énergie respectif (56), et désigner le dispositif de stockage d'énergie (56) ou au moins l'un des dispositifs de stockage d'énergie (56) dans une ou plusieurs autres de la pluralité de valves (50) en tant que second dispositif de stockage d'énergie respectif (56).

13. Convertisseur de source de tension selon les revendications 11 et 12, dans lequel chaque valve (50) inclut au moins l'un de la pluralité de modules (52).

14. Convertisseur de source de tension selon la revendication 12 ou la revendication 13, dans lequel chaque partie de branche (38, 40) de la branche de convertisseur (36) inclut une respective de la pluralité de valves (50), et le dispositif de commande (62) est programmé pour fonctionner dans le mode de régulation d'énergie pour :
{i} désigner le dispositif de stockage d'énergie (56) ou au moins l'un des dispositifs de stockage d'énergie (56) dans la valve (50) de l'une des première et seconde parties de branche (38, 40) en tant que premier dispositif de stockage d'énergie respectif (56), et désigner le dispositif de stockage d'énergie (56) ou au moins l'un des dispositifs de stockage d'énergie (56) dans la valve (50) de l'autre des première et seconde parties de branche (38, 40) en tant que second dispositif de stockage d'énergie respectif (56) ; et
{ii} commander la commutation des éléments de commutation (54) dans les valves (50) des première et seconde parties de branche (38, 40) pour forcer un courant commun à circuler à travers les premier et second dispositifs de stockage d'énergie (56) de manière à : transférer le tampon d'énergie stocké à partir du ou de chaque second dispositif de stockage d'énergie (56) au ou à chaque premier dispositif de stockage d'énergie (56) ; ou transférer de l'énergie à partir du ou de chaque premier dispositif de stockage d'énergie (56) à la capacité de stockage d'énergie fournie du ou de chaque second dispositif de stockage d'énergie (56).

15. Convertisseur de source de tension selon la revendication 14, dans lequel la commande de la commutation des éléments de commutation (54) dans les valves (50) des première et seconde parties de branche (38, 40) pour forcer un courant commun à circuler à travers les premier et second dispositifs de stockage d'énergie (56) inclut la commande de la commutation des éléments de commutation (54) dans les valves (50) des première et seconde parties de branche (38, 40) pour former un trajet de circulation de courant dans lequel le courant commun circule à travers les parties de branche (38, 40) de la branche de convertisseur (36) et le réseau CC (44).

16. Convertisseur de source de tension selon l'une quelconque des revendications 12 à 15, dans lequel le convertisseur de source de tension inclut une pluralité de branches de convertisseur (36), la borne CA (42) de chaque branche de convertisseur (36) pour une connexion à une phase respective d'un réseau CA multiphase (46), au moins l'une des parties de branche (38, 40) de chaque branche de convertisseur (36) incluant une respective de la pluralité de valves (50), et le dispositif de commande (62) est programmé pour fonctionner dans le mode de régulation d'énergie pour :
{i} désigner le dispositif de stockage d'énergie (56) ou au moins l'un des dispositifs de stockage d'énergie (56) dans au moins une valve sélectionnée (50) d'une de la pluralité de branches de convertisseur (36) en tant que premier dispositif de stockage d'énergie respectif (56), et désigner le dispositif de stockage d'énergie (56) ou au moins l'un des dispositifs de stockage d'énergie (56) dans au moins une valve sélectionnée (50) d'une autre de la pluralité de branches de convertisseur (56) en tant que second dispositif de stockage d'énergie respectif (56) ; et
{ii} commander la commutation des éléments de commutation (54) dans les valves sélectionnées (50) pour forcer un courant commun à circuler à travers les premier et second dispositifs de stockage d'énergie (56) de manière à : transférer le tampon d'énergie stocké à partir du ou de chaque second dispositif de stockage d'énergie (56) au ou à chaque premier dispositif de stockage d'énergie (56) ; ou transférer de l'énergie à partir du ou de chaque premier dispositif de stockage d'énergie (56) à la capacité de stockage d'énergie fournie du ou de chaque second dispositif de stockage d'énergie (56).

17. Convertisseur de source de tension selon la revendication 16, dans lequel la commande des éléments de commutation (54) dans les valves sélectionnées (50) pour forcer un courant commun à circuler à travers les premier et second dispositifs de stockage d'énergie (56) inclut la commande des éléments de commutation (54) dans les valves sélectionnées (50) pour former un trajet de circulation de courant dans lequel le courant commun circule à travers les valves sélectionnées (50), les phases CA étant connectées aux bornes CA (42) des branches de convertisseur (36) avec les valves sélectionnées (50) ; et le réseau CC (44).

18. Procédé de fonctionnement d'un convertisseur de source de tension (30), dans lequel le convertisseur de source de tension (30) comprenant :
- des première et seconde bornes CC (32, 34) pour une connexion à un réseau CC (44) ;
- une borne CA (42) pour une connexion à un réseau CA (46) ;
- une branche de convertisseur (36) s'étendant entre les première et seconde bornes CC (32, 34), la branche de convertisseur incluant des première et seconde parties de branche (38, 40) séparées par la borne CA (42), chaque partie de branche comprenant une pluralité d'éléments de commutation (54) et une pluralité de dispositifs de stockage d'énergie (56), chaque dispositif de stockage d'énergie (56) pour stocker et libérer de l'énergie pour fournir une tension, la pluralité d'éléments de commutation (54) agencés pour pouvoir être commutés pour commander une circulation de courant à travers chaque dispositif de stockage d'énergie (56),
dans lequel le procédé comprend un fonctionnement dans un mode de régulation d'énergie qui inclut les étapes consistant à :
{i} désigner un ou plusieurs de la pluralité de dispositifs de stockage d'énergie (56) en tant que premier dispositif de stockage d'énergie respectif (56), et désigner un ou plusieurs autres de la pluralité de dispositifs de stockage d'énergie (56) en tant que second dispositif de stockage d'énergie respectif (56) ; et
{ii} déterminer la quantité d'énergie requise devant être absorbée ou libérée par le ou chaque premier dispositif de stockage d'énergie (56) pour se rapprocher de ou atteindre un niveau d'énergie cible ;
le mode de régulation d'énergie inclut en outre les étapes consistant à :
{iii} commander la commutation de la pluralité d'éléments de commutation (54) pour forcer un courant à circuler à travers le ou chaque second dispositif de stockage d'énergie (56) de manière à stocker un tampon d'énergie dans le ou chaque second dispositif de stockage d'énergie (56) ou libérer de l'énergie pour fournir une capacité de stockage d'énergie dans le ou chaque second dispositif de stockage d'énergie (56), dans lequel le tampon d'énergie stocké ou la capacité de stockage d'énergie fournie dans le ou chaque second dispositif de stockage d'énergie (56) correspond à la quantité déterminée d'énergie requise devant être absorbée ou libérée par le ou chaque premier dispositif de stockage d'énergie (56) ; et
{iv} commander la commutation de la pluralité d'éléments de commutation (54) pour forcer un courant commun à circuler à travers les premier et second dispositifs de stockage d'énergie (56) de manière à : transférer le tampon d'énergie stocké à partir du ou de chaque second dispositif de stockage d'énergie (54) au ou à chaque premier dispositif de stockage d'énergie (56) ; ou transférer de l'énergie à partir du ou de chaque premier dispositif de stockage d'énergie (56) à la capacité de stockage d'énergie fournie du ou de chaque second dispositif de stockage d'énergie (56).
